(19) **Europäisches Patentamt / European Patent Office / Office européen des brevets**

(11) **EP 2 732 259 B1**

(12) ## EUROPÄISCHE PATENTSCHRIFT

(45) Veröffentlichungstag und Bekanntmachung des Hinweises auf die Patenterteilung:
**02.01.2019 Patentblatt 2019/01**

(21) Anmeldenummer: **12747884.0**

(22) Anmeldetag: **11.07.2012**

(51) Int Cl.:
**G01N 29/04** *(2006.01)* **G01M 5/00** *(2006.01)*
**G01H 13/00** *(2006.01)*

(86) Internationale Anmeldenummer:
**PCT/EP2012/002918**

(87) Internationale Veröffentlichungsnummer:
**WO 2013/007382 (17.01.2013 Gazette 2013/03)**

(54) **VERFAHREN ZUM BESTIMMEN DER STANDSICHERHEIT EINES BESTIMMUNGSGEMÄSS AN EINEM EINSATZORT AUFGESTELLTEN MASTES**

METHOD FOR DETERMINING THE STABILITY OF A MAST THAT HAS BEEN PROPERLY INSTALLED AT AN INSTALLATION SITE

PROCÉDÉ POUR DÉTERMINER LA STABILITÉ D'UN POTEAU INSTALLÉ DE MANIÈRE CONFROME À UN EMPLACEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2011 DE 102011107564**

(43) Veröffentlichungstag der Anmeldung:
**21.05.2014 Patentblatt 2014/21**

(73) Patentinhaber:
• **Meyer, Axel**
**46487 Wesel-Bislich (DE)**
• **Spaltmann, Horst**
**46487 Wesel-Blumenkamp (DE)**

(72) Erfinder:
• **SPALTMANN, Horst**
**46487 Wesel-Blumenkamp (DE)**
• **HORTMANNS, Michael**
**41464 Neuss (DE)**

(74) Vertreter: **Isfort, Olaf**
**Schneiders & Behrendt PartmbB**
**Rechts- und Patentanwälte**
**Huestraße 23**
**(Kortumkarree)**
**44787 Bochum (DE)**

(56) Entgegenhaltungen:
**EP-A1- 0 379 622      EP-A1- 1 517 141**
**DE-A1- 10 300 947**

• **C Dong ET AL: "THE SENSITIVITY STUDY OF THE MODAL PARAMETERS OF A CRACKED BEAM", 12th International Modal Analysis Conference. 1994 IMAC XII, 1 January 1994 (1994-01-01), pages 98-104, XP055276985, Retrieved from the Internet: URL:http://sem-proceedings.com/12i/sem.org -IMAC-XII-12th-Int-12-3-3-The-Sensitivity- Study-Modal-Parameters-Cracked-Beam.pdf [retrieved on 2016-06-01]**
• **Mohamed Kaouk ET AL: "Structural damage assessment using a generalized minimum rank perturbation theory", AIAA JOURNAL, vol. 32, no. 4, 1 April 1994 (1994-04-01), pages 836-842, XP055276983, DOI: 10.2514/3.12061?journa1Code=aiaaj**
• **JIANBIN DU ET AL: "Topological design of freely vibrating continuum structures for maximum values of simple and multiple eigenfrequencies and frequency gaps", STRUCTURAL AND MULTIDISCIPLINARY OPTIMIZATION, SPRINGER, BERLIN, DE, vol. 34, no. 2, 3 May 2007 (2007-05-03), pages 91-110, XP019511116, ISSN: 1615-1488, DOI: 10.1007/S00158-007-0101-Y**

**Beschreibung**

Die Erfindung betrifft ein Verfahren zum Bestimmen der Standsicherheit eines bestimmungsgemäß an einem Einsatzort aufgestellten, an einem Untergrund befestigten Mastes.

Des Weiteren betrifft die Erfindung eine Vorrichtung zur Durchführung dieses Verfahrens.

Ein entsprechendes Verfahren ist beispielsweise aus DE 103 00 947 A1 oder aus WO 2010/128056 A1 bekannt. Der Offenbarungsgehalt dieser internationalen Patentanmeldung soll durch Einbezug zum Offenbarungsgehalt der vorliegenden Anmeldung gehören.

Ein Mast kann im Rahmen der Erfindung ein im Wesentlichen vertikal ausgerichteter Träger beispielsweise von Beleuchtungen, Verkehrsschildern, Ampeln, Seilen, Antennen, Schilderbrücken oder dergleichen sein.

Solche Masten können beispielsweise durch Umwelteinflüsse, Unfälle oder Vandalismus beschädigt werden, so dass die Standsicherheit eines Mastes beispielsweise durch Korrosion, Materialermüdung oder Rissbildung gefährdet sein kann. Unter den Begriff der Standsicherheit fällt im Sinne der Erfindung insbesondere auch die Besteigbarkeit des Mastes für Personen, die z.B. Reparatur-, Wartungs- oder Montagearbeiten am Mast vornehmen müssen. Verfahren zum Bestimmen der Standsicherheit von Masten erfüllen im Sinne der Erfindung somit unter anderem den Zweck, unmittelbar vor Besteigen des Mastes, diesen zu prüfen, um festzustellen, ob die Besteigung des Mastes sicher ist oder nicht. Unabhängig davon ist es erforderlich, die Standsicherheit eines Mastes in regelmäßigen Abständen zu überprüfen, um rechtzeitig erkennen zu können, ob die Standsicherheit derart beeinträchtigt ist, dass ein Mast ausgetauscht werden muss.

Aufgabe der Erfindung ist es, ein neuartiges Verfahren zum Bestimmen der Standsicherheit eines bestimmungsgemäß an einem Einsatzort aufgestellten Mastes bereitzustellen, welches zuverlässig und sehr genau eine Bestimmung der Standsicherheit des Mastes ermöglicht.

Diese Aufgabe wird bei einem Verfahren der eingangs genannten Art dadurch gelöst, dass die Schwingungen, z.B in Form des Schwingungsspektrums des künstlich oder durch Umwelteinflüsse zum Schwingen angeregten Mastes erfasst und daraus wenigstens eine Eigenfrequenz des Mastes ermittelt wird.

Ein wesentlicher Aspekt der Erfindung ist, dass eine Nichtlinearität des Schwingungsverhaltens des angeregten Mastes analysiert wird. Anhand des Ergebnisses dieser Analyse kann nämlich unmittelbar festgestellt werden, ob eine Schädigung des Mastes und/oder seiner Befestigung im Fundamentbereich vorliegt.

Eine Nichtlinearität des Schwingungsverhaltens kann sich z.B. in einer Abhängigkeit der Schwingungsfrequenz von der Schwingungsamplitude äußern. Diese Abhängigkeit kann unmittelbar und sehr einfach analysiert werden. Diese Abhängigkeit kann wiederum als Indikator für ein "gesundes", d.h. intaktes, bzw. ein "ungesundes", d.h. geschädigtes, Mastfundament verwendet werden.

Vorzugsweise wird zur Analyse etwaiger Nichtlinearitäten des Schwingungsverhaltens die Abhängigkeit der Schwingungsfrequenz von der Schwingungsamplitude ermittelt. Auf Basis dieser Abhängigkeit kann dann eine Kalibrierungsfrequenz abgeleitet werden, mit der ein vorab festgelegtes mechanisches (statisches und/oder dynamisches) Modell des Mastes (z.B. wie in der oben zitierten WO 2010/128056 A1 beschrieben) kalibriert wird, wobei auf Basis des kalibrierten Modells dann die Steifigkeit des Mastes ermittelt wird. Hierbei fließt die generalisierte Masse insbesondere wie folgt in die numerische oder rechnerische Ermittlung der gesuchten Auslenkung ein:

$$\Omega^2 \sim \frac{1}{\text{generalisierte Masse}}$$

mit $\Omega = 2\pi \cdot$ Eigenfrequenz $f_e$.

Der zu untersuchende Mast wird für die weitere Analyse zunächst in ein generalisiertes System transformiert. Dies ist ein gängiges Verfahren, um ein komplexes System, das aus vielen Stäben, Knoten und Massen besteht, in einen äquivalenten Einmassenschwinger zu überführen. Der Einmassenschwinger hat die gleichen dynamischen Eigenschaften wie das komplexe Ursprungssystem. Dies bezieht sich insbesondere auf die Steifigkeit und auf die Eigenfrequenz des Systems. Üblicherweise wird der virtuelle Einmassenschwinger an der Stelle der maximalen Verformung der zugrunde gelegten Schwingungsform des Systems positioniert. Das ist hier die Mastspitze.

Durch eine Energiebetrachtung und der Forderung, dass die Energie während einer Schwingperiode für beide Systeme gleich sein muss, ergeben sich die entsprechenden Formeln zur Bestimmung der Kenngrößen des generalisierten Ersatzsystems. Dies sind:

$M_{gen}$ generalisierte Masse und

$C_{gen}$ generalisierte Steifigkeit

Die Formeln zur Bestimmung der generalisierten Masse lauten:

$$E = \int_0^H \frac{1}{2} \cdot m(z) \cdot \dot{y}^2(z) dz = \frac{1}{2} \cdot M_{gen} \cdot \dot{y}^2(H)$$

$$\dot{y}(z) = y(z) \cdot \omega_e = y_{max} \cdot \phi(z) \cdot \omega_e$$

Die Energie E ist für beide Systeme gleich. Da das generalisierte System hier an der Stelle der maximalen modalen Verformung angebracht ist, gilt:

$$\dot{y}(H) = y(H) \cdot \omega_e = y_{max} \cdot \phi(H) \cdot \omega_e = y_{max} \cdot 1{,}0 \cdot \omega_e$$

Die generalisierte Masse ist dann:

$$M_{gen} = \int_0^H m(z) \cdot \phi^2(z) dz$$

Nimmt man für die Schwingungsform beispielsweise $\phi(z) = \left(\dfrac{z}{H}\right)^2$ an (parabelförmiger Verlauf), so erhält man folgende Gleichung für $M_{gen}$:

$$M_{gen} = \int_0^H m(z) \cdot \left(\frac{z}{H}\right)^4 dz$$

für m(z) = m = const. folgt dann

$$M_{gen} = m \cdot \frac{H}{5}$$

Die Eigenfrequenz $f_e$ des generalisierten Systems ist:

$$f_e = \frac{1}{2\pi} \cdot \sqrt{\frac{C_{gen}}{M_{gen}}} = \frac{\omega_e}{2\pi}$$

Die Bestimmung von $C_{gen}$ erfolgt hier über die Messung der Eigenfrequenz des Systems. Hierzu wird die o.g. Formel umgestellt:

$$C_{gen} = \left(2\pi \cdot f_e\right)^2 \cdot M_{gen} = \omega_e^2 \cdot M_{gen}$$

Die so ermittelte generalsierte Steifigkeit $C_{gen}$ ist die Gesamtsteifigkeit $C_{Gesamt}$ des Systems.

Dieses Verfahren ist für Masten aus unterschiedlichsten Materialien mit verschiedensten Formgebungen anwendbar. Es kann beispielsweise bei einem konisch oder abgesetzt ausgebildeten Mast mit Querschnittssprung eingesetzt werden. Des Weiteren ist das Verfahren nicht nur für Pfosten, Pfosten im Wasser oder Freileitungsmaste, sondern auch für andere Masttypen wie z.B. Peitschenmaste, Auslegermaste, Ampelmaste, Doppelmaste, A-Maste, Gittermaste, Verkehrszeichenbrücken und einfache Rahmen anwendbar.

Eine künstliche Anregung des Mastes kann mit einem Hammer, mit Hilfe eines Seils, ggf Unwuchterreger oder ähnlich erfolgen. Auch kann eine künstliche Anregung des Mastes manuell erfolgen. Die Bestimmung der Standsicherheit gemäß dem erfindungsgemäßen Verfahren basiert nicht allein auf einem Vergleich von theoretischen Steifigkeiten mit aus einer Messung abgeleiteter Steifigkeit. Stattdessen werden Verformungen infolge äußerer Einwirkungen wie z.B. Windlasten oder Mannlasten, des Mastes an einem kalibrierten, vorzugsweise numerischen, vorab festgelegten Modell des Mastes berechnet und dann mit Grenzwerten verglichen. Hierdurch ist eine sehr individuelle Bestimmung der Standsicherheit eines Mastes möglich. Diese Bewertung ist nicht nur mastspezifisch, sondern auch abhängig von der Beanspruchungsart. So kann z.B. sowohl die Standsicherheit bei Bemessungslasten (i.d.R. Windlasten) als auch die Standsicherheit beim Besteigen (Mannlasten) bewertet werden.

Wichtig im Rahmen der vorliegenden Erfindung sind folgende Punkte:
Es kann, wie erwähnt, eine Berechnung der Amplitudenabhängigkeit der wenigstens einen Eigenfrequenz und darauf aufbauend eine Berechnung der maßgebenden Eigenfrequenzen für die Standsicherheitsbewertung erfolgen.

Des Weiteren kann die voraussichtliche Lebensdauer nichtlinear für Masten basierend auf einer Schädigungsgeschwindigkeit berechnet werden, die sich aus den Messergebnissen ergibt. Dabei kann eine Zuschärfung (d.h. eine Verbesserung der Genauigkeit) der Ergebnisse ab der zweiten Messung erfolgen.

Es kann aus einer Anbindung eine Einlesemöglichkeit für Mastkenndaten aus z.B. Excel-Dateien bzw. einer Datenbank erfolgen.

Es kann eine automatische Lokalisierung von Masten mit Hilfe vorhandener GPS-Daten und eine Zuordnung von Mastdaten aus Datenbanken erfolgen. Die Holzfeuchte kann abhängig vom jeweiligen Datum vorgegeben und automatisch auf den Messzeitpunkt umgerechnet werden.

Es kann eine Routine zur Identifikation von Seilfrequenzen bei beseilten Masten und automatischen Festlegung von Mastfrequenzen verwendet werden.

Der Seildurchhang kann automatisch aus Tabellenwerken ermittelt bzw. berechnet werden. Die Abhängigkeit des Durchhangs der Seile von der Temperatur in der Umgebung der Seile kann berücksichtigt werden. In einem Berechnungsprogramm kann eine Wahlmöglichkeit vorgesehen sein, ob der Seildurchhang und/oder die Abhängigkeit des Durchhangs von der Temperatur automatisch vorgegeben oder eingeben werden sollen.

Es kann der Zusammenhang zwischen oder das Verhältnis von Drehfedersteifigkeit und Gesamtsteifigkeit (siehe WO 2010/128056 A1) zur Bewertung der Schadensquelle (Schaft oder Fundament) unter Berücksichtigung der Amplitudenabhängigkeit der Eigenfrequenzen verwendet werden.

Es kann der Abstand zwischen den ersten Eigenfrequenzen und die Werte anderer Eigenfrequenzen analysiert werden. Hieraus kann auf weitere Systemparameter zurückgeschlossen werden.

Das Verfahren kann auch bei GFK-Masten unter Berücksichtigung der besonderen Materialkenndaten für glasfaserverstärkte Kunststoffe angewendet werden.

Das Verfahren kann auch zur Bewertung von Anbauteilen (z.B. Traversen) verwendet werden. Hierzu werden die Eigenfrequenzen und Schwingungsformen der Anbauteile entweder herausgelöst vom übrigen System (bei ausreichender Entkopplung) oder im Gesamtsystem (bei gekoppelten Schwingungsformen) ermittelt.

Das Verfahren kann auch auf Maste in Knicken von Leitertrassen angewendet werden.

Zur Durchführung des Verfahrens können eine oder mehrere Sensoren eingesetzt werden, die mit dem Mast verbindbar sind.

Es kann eine Berücksichtigung mehrerer gemessener dynamischer Kenngrößen bei der Bestimmung der Standsicherheit erfolgen, wie z.B. die Berücksichtigung mehrerer Eigenfrequenzen und/oder die Berücksichtigung gemessener Ordinaten von Schwingungsformen bei Verwendung mehrerer Sensoren. Mehrere dynamische Kenngrößen können dann verwendet werden, wenn beispielsweise nicht nur die Fundamentsteifigkeit gesucht wird, sondern auch Aussagen zum Mastschaft, zu Bereichen mit Schadstellen, zur Tragfähigkeit einzelner Stäbe bei Fachwerken usw. gemacht werden sollen.

Das Verfahren kann die Lokalisierung von Systembereichen mit den identifizierten Schwach- bzw. Schadstellen ermöglichen.

Das Verfahren ist grundsätzlich auf sehr komplex konstruierte Maste anwendbar. Beispiele hierfür sind Kragarme mit Ausleger (Ampelmast oder Ausleger-Schildermasten an Autobahnen), Rahmen (Schilderbrücke an Autobahnen oder Mautbrücken), Maste für Oberleitungen (Bahn, Nahverkehr), Maste von Seilbahnen usw..

Das Verfahren ist grundsätzlich auf Maste jeglicher Art anwendbar, wie beispielsweise auch auf Fachwerkmaste (wie bei Oberleitungsmasten der Bahn) oder Mobilfunkmaste, Schleuderbetonmaste oder Flutlichtmaste (auch mit eckigem Querschnitt am Fuß).

Als nächstes wird ein Ausführungsbeispiel für die Analyse von nichtlinearem Schwingungsverhalten durch Ermittlung der Abhängigkeit der aus dem Schwingungsspektrum des Mastes ermittelten Eigenfrequenz des Mastes von der Schwingungsamplitude erläutert:

Zunächst wird eine Berechnung der Eigenfrequenz im Zeitbereich vorgenommen. Durch diese Auswertung kann eine ggf. vorhandene Abhängigkeit der Eigenfrequenz von der Schwingungsamplitude festgestellt werden. Diese Abhängigkeit kann wiederum als Indikator für ein "gesundes" bzw. ein "ungesundes" Fundament verwendet werden. Weiterhin erlaubt diese Auswertemöglichkeit die Berücksichtigung des Unterschiedes zwischen dynamischem und statischem E-Modul z.B. für den Boden oder auch für den Werkstoff Holz, was wichtig für die Bestimmung der statischen Steifigkeitswerte ist. Diese Auswertung ist insbesondere für Masten mit ausgeprägtem nichtlinearem Verhalten empfehlenswert.

Zunächst wird der gemessene Zeitschrieb der nach einer Anregung mittels eines Beschleunigungssensors am Mast erfassten Beschleunigungswerte bandpassgefiltert. Das Frequenzband wird mit Hilfe der ausgewählten Eigenfrequenz aus der Standardauswertung festgelegt ($\pm$ 20% der ausgewählten Eigenfrequenz aus der Standardauswertung). Aus dem Zeitschrieb werden so störende Anteile (Rauschen oder Frequenzanteile höherer Eigenfrequenzen) eliminiert.

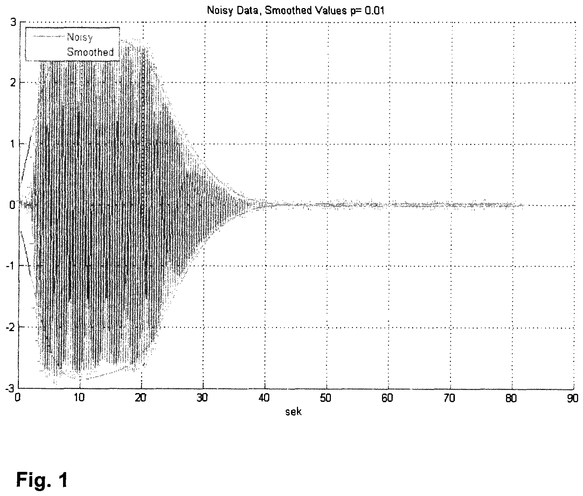

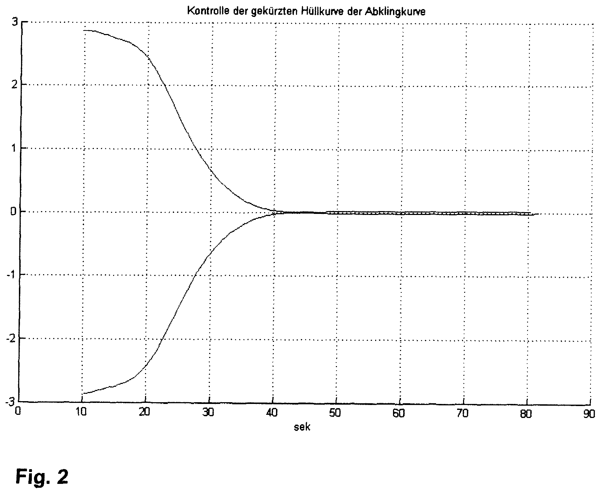

Mit Hilfe einer Identifikationsroutine werden dann zunächst die Hüllkurven für die lokalen Maxima (obere Hüllkurve) und Minima (untere Hüllkurve) berechnet. Diese Hüllkurven werden dann noch durch approximierende Splines, die die gleichen Stützstellen wie die Hüllkurven haben, geglättet (siehe Figur 1). In einem weiteren Schritt sucht diese Routine dann den Bereich, in dem keine manuelle Anregung mehr erfolgt und der Mast frei ausschwingt. Dieser Bereich liegt in der Regel am Ende des Zeitverlaufs. Dieser Bereich wird extrahiert (siehe Figur 2).

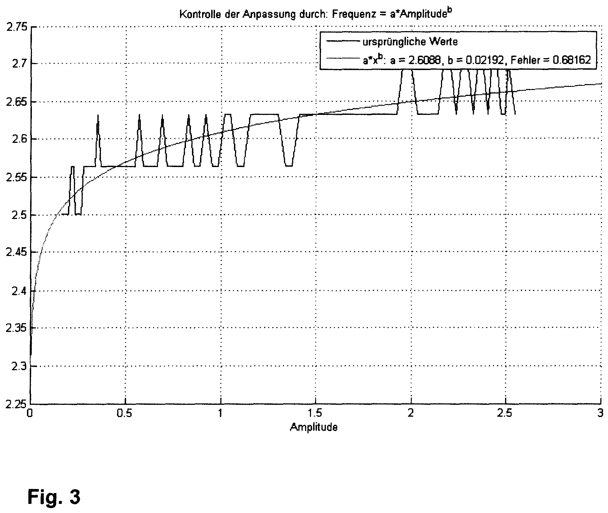

In dem extrahierten Ausschwingbereich werden dann die Abstände der lokalen Maxima und die Abstände der lokalen Minima sowie die zugehörigen Schwingungsamplituden $y_{pp,i}$ (Beschleunigungen) berechnet. Die Abstände sind die Perioden $T_i$ des Zeitverlaufs aus denen dann abschnittsweise (je Periode i) Frequenzwerte $f_i = 1/T_i$ berechnet werden können. Die Frequenz lässt sich damit dann als Funktion der Beschleunigungsschwingamplitude $y_{pp}$ darstellen. Ein Beispiel ist in Figur 3 dargestellt.

Die so ermittelte Abhängigkeit der Frequenz von der Schwingamplitude wird dann mit Hilfe einer Potenzfunktion approximiert. Diese Funktion ist wie folgt definiert:

$$f(\ddot{y}) = a \cdot \ddot{y}^b$$

Zunächst wird die Güte der Anpassung über einen Fehlerwert geprüft. Ist dieser Fehler nahe Null, so ist praktisch keine Anpassung vorhanden. Für einen Fehlerwert nahe 1 liegt eine praktisch perfekte Anpassung vor. Vorzugsweise werden Approximationen mit Fehlerwerten kleiner 0,3 nicht verwertet. In diesen Fällen wird davon ausgegangen, dass keine Abhängigkeit der Frequenz von der Amplitude vorliegt.

Liegt eine Abhängigkeit vor (Fehler >0,3), wird der Exponent b analysiert:
Ist b<0 liegt eine degressive Abhängigkeit vor. Das heißt, die Frequenz wird mit zunehmender Amplitude kleiner. Dieser Fall weißt auf Probleme im Fundament hin, da dort normalerweise eine progressive Abhängigkeit auftritt.

Ist b≥0 liegt eine progressive Abhängigkeit vor. In diesem Fall steigt die Frequenz mit zunehmender Amplitude an. Das ist der Normalfall, der genau wie der dynamische E-Modul auf dem Effekt beruht, dass bei schnellen Bewegungen im Boden das Wasser in den Kapillaren nicht genauso schnell verdrängt werden kann und eine scheinbare Versteifung des Bodens auftritt.

In beiden Fällen wird eine Kalibrierungsfrequenz $f_a$, die zur Kalibrierung des mathematischen Modells des Mastes und damit zur Berechnung der Auslenkungen bzw. Verformungen des Mastes verwendet wird, mit Hilfe der gefundenen Abhängigkeit der Eigenfrequenz neu berechnet. Für diese Berechnungen werden folgende Amplituden verwendet:

| Wertebereich Koeffizient b | Amplitude y für Frequenzberechnung bei Amplitudenabhängigkeit und Frequenz $f_a$ für Auswertung | Amplitudenabhängigkeit | Konsequenz |
|---|---|---|---|
| 0≤b<0,01 | $f_a = f_e$ | keine | Keine |

(fortgesetzt)

| Wertebereich Koeffizient b | Amplitude y für Frequenzberechnung bei Amplitudenabhängigkeit und Frequenz $f_a$ für Auswertung | Amplitudenabhängigkeit | Konsequenz |
|---|---|---|---|
| b>0,01 | $\ddot{y}_{grenz} = 0{,}2 \cdot 0{,}02 \cdot \omega^2 \cdot (0{,}05 \cdot H)$ <br> $f_a = a \cdot \ddot{y}_{grenz}{}^b$ | progressiv | Fundament ok, aber Frequenz wird gegenüber dem Wert aus dem Spektrum abgemindert |
| -0,01≤b<0 | $\ddot{y}_{grenz} = 0{,}02 \cdot \omega^2 \cdot 0{,}05 \cdot H)$ <br> $f_a = a \cdot \ddot{y}_{grenz}{}^b \cdot 0{,}95^2$ | schwach degressiv | Fundament noch ok, aber Frequenz wird gegenüber dem Wert aus dem Spektrum etwas abgemindert |
| -0,02≤b<-0,01 | $\ddot{y}_{grenz} = 0{,}02 \cdot \omega^2 \cdot (0{,}05 \cdot H)$ <br> $f_a = a \cdot \ddot{y}_{grenz}{}^b \cdot 0{,}9^2$ | moderat degressiv | Fundament sollte beobachtet werden, Frequenz wird gegenüber dem Wert aus dem Spektrum abgemindert |
| b<-0,02 | $\ddot{y}_{grenz} = 0{,}02 \cdot \omega^2 \cdot (0{,}05 \cdot H)$ <br> $f_a = a \cdot \ddot{y}_{grenz}{}^b \, 0{,}85^2$ | stark degressiv | Fundament ist wahrscheinlich beschädigt, Frequenz wird gegenüber dem Wert aus dem Spektrum deutlich abgemindert |

Die Grenzamplituden ergeben sich abhängig von der Masthöhe H über GOK (Geländeoberkante) und der Eigenkreisfrequenz $\omega$ aus dem Spektrum.

Für den Fall b<0 wurde dabei angenommen, dass ausgehend von einer Maximalamplitude von 5% der Masthöhe der quasi-statische Bereich der Abklingkurve dann erreicht wird, wenn die Schwingamplituden auf 2% der Maximalamplitude abgeklungen sind. In diesem Amplitudenbereich wird unterstellt, dass die dynamischen Steifigkeiten den Steifigkeiten entsprechen, die bei einer quasi stationären Beanspruchung auftreten. Abhängig von der Größenordnung des Parameters b wird die Kalibrierungsfrequenz $f_a$ dann noch einmal abgemindert. Diese Reduktionsfaktoren sind quasi Sicherheitsfaktoren, die bei einer degressiven Abhängigkeit u. a. die Unsicherheiten dieser Auswerteroutine näherungsweise abfangen sollen. Abhängig von der Größenordnung von b entsprechen diese Faktoren Reduktionen der Steifigkeit um 5% (f: -0,01 ≤b<0), 10% (f: -0,02≤b<-0,01) bzw. 15% (f: b<-0,02).

Für den Fall b>0,01 wird eine kleinere Amplitude zur Berechnung der Kalibrierungsfrequenz verwendet. Diese beträgt 20% der Amplitude für den Fall b<0.

Die weitere Berechnung (z.B. gemäß WO 2010/128056 A1) erfolgt dann mit der Kalibrierungsfrequenz $f_a$. Diese Frequenz ist bei einer festgelegten Amplitudenabhängigkeit i.d.R. kleiner oder höchstens genauso groß wie die aus dem Spektrum ermittelte Eigenfrequenz $f_e$.

Gemäß einem weiteren wichtigen Aspekt der Erfindung kann die Standsicherheit eines an einem Einsatzort aufgestellten, an einem Fundament befestigten Mastes bestimmt werden, wobei das Schwingungsspektrum des künstlich oder durch Umwelteinflüsse zum Schwingen angeregten Mastes erfasst und daraus wenigstens eine Eigenfrequenz des Mastes ermittelt wird, und wobei dann auf dieser Basis die Lebensdauer des Mastes ermittelt wird. Beispielsweise kann die Restlebensdauer basierend auf den Ergebnissen der Frequenzmessungen wie nachfolgend beschrieben abgeschätzt werden.

Abhängig vom Baujahr des Mastes und/oder abhängig von der berechneten Verschiebung bzw. Auslenkung bzw. Verformung und ggf. den Klassengrenzen (wie z.B. in WO 2010/128056 A1 beschrieben) wird eine Lebensdauer für den Mast abgeschätzt.

In der Regel führen die Messungen zu der Schlussfolgerung, dass die Masten zum Messzeitpunkt größere Verschiebungen aufweisen als ein perfekter, "ungeschädigter" Mast. Die Ursachen für die größeren Verschiebungen sind u. a durch die Steifigkeit der Fundamentierung (weicher als beim perfekten Mast) und durch zeitabhängige Faktoren, die zu einer Abnahme der Systemsteifigkeit führen, bedingt.

Da bei einer ersten Messung an einem Mast keine Aussagen zu den Masteigenschaften zu einem früheren Zeitpunkt vorhanden sind, wird angenommen, dass der Mast zum Einbauzeitpunkt perfekt, d.h. intakt war. Aus der Abnahme der Systemsteifigkeit im Zeitraum zwischen Einbau und erster Messung lässt sich damit eine Geschwindigkeit der Steifigkeitsabnahme ableiten. Hierzu wird angenommen, dass der Mast immer eingespannt ist und, dass Steifigkeitsänderungen nur durch (zeitabhängige) Querschnittsreduktion bedingt sind. Dabei wird unterstellt, dass sich der Mastquerschnitt, d.h. der Außendurchmesser, von außen nach innen mit dieser Geschwindigkeit verkleinert. Diese Annahme ergibt sich aus der Überlegung, dass beispielsweise gemäß verschiedenen Normen (z.B. DIN 4133) für bestimmte Bauteile bei der Bemessung Korrosionszuschläge zu berücksichtigen sind. Diese Korrosionszuschläge beschreiben im Prinzip auch eine Abnahme des statisch relevanten Querschnitts abhängig von der Zeit. Bei Holzmasten ergibt sich die Reduktion der Querschnitte z.B. durch Schwinden, Fäulnis oder Pilzbefall.

Der Durchmesser der Maste ist damit eine Funktion der Zeit t:

$$d_a(t) = d_{a0} - v_s \cdot t$$

mit

$d_{a0}$    Außendurchmesser zum Einbauzeitpunkt

$d_a(t)$    Außendurchmesser zum Zeitpunkt t

$d_i$    Innendurchmesser bei Kreisringquerschnitt

$v_s$    Geschwindigkeit der Abnahme des Außendurchmessers in mm/Jahr

Aus dem zugrunde liegenden mechanischen Modell lassen sich auf dieser Basis die Kopfpunktverschiebungen des Mastes $\delta(t)$ bei einer einwirkenden Kraft (z.B. ortstypische Windlast) als Funktion der Zeit berechnen. Man kann damit eine Bestimmungsgleichung für $v_s$ erhalten, da die Variable $v_s$ die einzige Unbekannte ist. Die Lösung dieser Gleichung und die Bestimmung von $v_s$ erfolgt z.B. mittels eines Iterationsalgorithmus. Mit dieser Geschwindigkeit $v_s$ kann dann berechnet werden, zu welchem Zeitpunkt die zulässige Verformung $\delta_{zul}$ überschritten wird. Hierzu wird die Zeit t solange gesteigert bis die folgende Gleichung erfüllt ist: $\delta(t=t_{LD})=\delta_{zul}$. Die Zeit $t_{LD}$ ist die abgeschätzte Lebensdauer. Die Differenz zwischen $t_{LD}$ und der verstrichenen Zeit vom Einbau- bis zum Messzeitpunkt $t_{mes}$ ist die gesuchte, abgeschätzte Restnutzungsdauer.

Die Geschwindigkeit wird dabei noch mit einem Sicherheitsfaktor von 1,5 multipliziert um einen Anstieg der Schädigungsgeschwindigkeit näherungsweise zu berücksichtigen. Die durch das beschriebene Verfahren berücksichtigte Zeitabhängigkeit der Steifigkeit ist nichtlinear, da sich die angenommene Schädigungsgeschwindigkeit auf den Durchmesser bezieht.

Ab der zweiten Messung kann durch Berücksichtigung der ersten Messwerte eine genauere Berechnung der Schädigungsgeschwindigkeit erfolgen. Hierdurch ist einerseits eine mögliche Zunahme der Schädigungsgeschwindigkeit genauer erfassbar, andererseits können aber auch überschätzte Schädigungsgeschwindigkeiten aus der ersten Schätzung korrigiert werden und damit eine günstigere Lebensdauerabschätzung erreicht werden.

Als nächstes wird ein Ausführungsbeispiel für die Berücksichtigung des Einflusses der Holzfeuchte auf strukturmechanische Eigenschaften bei der Auswertung von Frequenzmessungen an Freileitungsmasten aus Holz gegeben: Die Holzfeuchte beeinflusst strukturmechanische Eigenschaften des Werkstoffes Holz. Bei frei bewitterten Holzmasten folgt die Holzfeuchte im Mittel ungefähr dem Temperaturverlauf. Im Jahresverlauf können hierdurch Schwankungen der Holzfeuchte von ca. 12% bis 20% auftreten. Für Holzmaste relevant ist ein Bereich von ca. 12% bis 18%, da dort Temperaturen von >0° C unterstellt werden können. Bei Temperaturen unter 0°C besteht die Möglichkeit, dass der Boden gefroren ist, so dass die Systemsteifigkeit in diesem Zustand nicht repräsentativ für den Fall mit maximalem Wind (Wintersturm oder Frühjahrssturm mit Lufttemperatur ca. 4-5°C) ist. Kurzzeitige Anstiege in Folge von Niederschlag sind möglich. Hierdurch können Holzfeuchtigkeiten außen von bis zu 30% erreicht werden, die in der Regel durch den Einfluss von Wind aber schnell abtrocknen.

Ein maßgebender strukturmechanischer Parameter ist der E-Modul (der auch die Biegesteifigkeit beeinflusst). Dieser Parameter hängt von der aktuellen Holzfeuchte ab. Es ergibt sich, dass der E-Modul im relevanten Feuchtigkeitsbereich u=(12%-18%) von etwa 9200 MPa bis 10000 MPa, bzw. um ca. 8%. schwankt. Dieser Bereich kann als realistisch für imprägnierte Holzmasten angesehen werden. Kurzzeitig sind Holzfeuchtigkeiten von 30% außen möglich. Dort sinkt der E-modul dann auf etwa 8600 MPa ab. Der für die Biegesteifigkeit relevante E-Modul stellt sich aber als mittlerer Wert, abhängig von der Spannungsverteilung über den Querschnitt ein. Da die inneren Bereiche des Mastes durch kurzfristige Feuchtigkeitserhöhungen an der Außenseite nicht oder nur wenig beeinflusst werden (hängt von der Expositionsdauer ab), kann der Schwankungsbereich wie oben angegeben angenommen werden.

Wenn die Feuchte nicht explizit eingegeben wird, wird ein E-Modul verwendet, der für eine Feuchte von 15% gilt. Dies bedeutet, dass die maximalen Abweichungen für die rechnerische Biegesteifigkeit und damit die berechneten Verformungen aus dem Biegeanteil bei etwa ±3,5% liegen. Diese Abweichungen sind unter Berücksichtigung von implementierten Sicherheiten bereits als tolerabel anzusehen. Hierbei ist auch zu bedenken, dass sich die Gesamtsteifigkeit aus einem Drehfederanteil (Fundament) und einem Biegeanteil (Mast) zusammensetzt. Da der Drehfederanteil bei realistischen Masten durchaus bis zu 30-40% betragen kann, ist die Schwankungsbreite der Gesamtsteifigkeit abhängig von der Feuchte geringer als die Schwankungsbreite der Biegesteifigkeit alleine. Realistisch sind Schwankungsbreiten von ca. $\pm 2,5\%$.

Dennoch wird vorzugsweise eine Korrekturfunktion verwendet, die die Abhängigkeit der Holzfeuchte von der Jahreszeit ausnutzt.

Die Systemsteifigkeit ist somit basierend auf einem E-Modul berechnet, der für u=15% gilt oder für die bei der Messung eingelesene Feuchtigkeit $u_{mess}$. Diese Steifigkeit repräsentiert den Zustand bei der Messung. Für das perfekte System (eingespannt) ergibt sich damit eine Vergleichsfrequenz von $f_{voll,mes}$. Für die Bewertung des Systemverhaltens wird der E-Modul auf eine Feuchtigkeit von u=18% (passt zu 5°C im Sturmfall) umgerechnet. Hierdurch werden die berechneten Verschiebungen, die zur Bewertung herangezogen werden, maximal um ca. 5% größer (für den Fall: Messung bei u=12% im Sommer). Die Frequenz des perfekten Systems $f_{voll,bewertung}$ bei u=18% wird damit kleiner und zwar um maximal ca. 2,5%.

Die Erfindung betrifft nicht nur ein Verfahren, sondern auch eine Vorrichtung zur Durchführung des Verfahrens nach einem der vorhergehenden Ansprüche, mit einer die Bestimmung der Steifigkeit des Mastes unterstützenden Recheneinheit. Hierzu weist die Recheneinheit eine geeignete Programmierung mit entsprechenden Programmschritten auf. Die Vorrichtung kann wenigstens einen Beschleunigungssensor und Mittel zur Übergabe von durch den Sensor erfassten Schwingungsmesswerten an die Recheneinheit aufweisen. Weiterhin kann die Vorrichtung einen Feuchtigkeitssensor und Mittel zur Übergabe von durch den Sensor erfassten Feuchtigkeitswerten an die Recheneinheit aufweisen. Schließlich weist die Vorrichtung zweckmäßig Ausgabemittel zur Ausgabe der ermittelten Standsicherheitsdaten des Mastes auf.

## Patentansprüche

1. Verfahren zum Bestimmen der Standsicherheit eines an einem Einsatzort aufgestellten, an einem Fundament befestigten oder im Boden stehenden Mastes, wobei die Schwingungen des künstlich oder durch Umwelteinflüsse zum Schwingen angeregten Mastes messtechnisch erfasst und daraus wenigstens eine Eigenfrequenz des Mastes ermittelt wird,
**dadurch gekennzeichnet, dass** eine Nichtlinearität des Schwingungsverhaltens des angeregten Mastes analysiert wird und anhand des Ergebnisses dieser Analyse festgestellt wird, ob eine Schädigung des Mastes und/oder seiner Befestigung im Fundamentbereich vorliegt und dass die Abhängigkeit der Eigenfrequenz von der Schwingungsamplitude ermittelt und auf Basis dieser Abhängigkeit eine Kalibrierungsfrequenz berechnet wird, mit der ein mechanisches Modell des Mastes kalibriert und auf dieser Basis die Standsicherheit des Mastes ermittelt wird.

2. Verfahren nach Anspruch 1, **dadurch gekennzeichnet, dass** die Kalibrierungsfrequenz kleiner als die ermittelte Eigenfrequenz oder maximal gleich dieser ist.

3. Verfahren nach einem der vorhergehenden Ansprüche, **dadurch gekennzeichnet, dass** auf Basis der aus dem Schwingungsspektrum abgeleiteten Steifigkeit des Mastes eine Auslenkung des Mastkopfes unter einer externen Belastung des Mastes ermittelt wird, wobei die ermittelte Auslenkung zur Bestimmung der Standsicherheit des Mastes mit einer zulässigen Auslenkung verglichen wird.

4. Verfahren zum Bestimmen der Standsicherheit eines an einem Einsatzort aufgestellten, an einem Fundament befestigten oder im Boden stehenden Mastes, insbesondere nach einem der Ansprüche 1 bis 3, wobei das Schwingungsspektrum des künstlich oder durch Umwelteinflüsse zum Schwingen angeregten Mastes erfasst und daraus wenigstens eine Eigenfrequenz des Mastes ermittelt wird, wobei auf dieser Basis die Lebensdauer des Mastes ermittelt wird.

5. Verfahren nach Anspruch 4, **dadurch gekennzeichnet, dass** als weiterer Zustandsparameter bei der Abschätzung der Lebensdauer das Baujahr des Mastes und/oder Klassengrenzen verwendet werden.

6. Verfahren nach Anspruch 4 oder 5, **dadurch gekennzeichnet, dass** auf Basis der aus der Schwingungsmessung abgeleiteten Steifigkeit des Mastes eine Auslenkung des Mastkopfes unter einer externen Belastung des Mastes ermittelt wird, wobei die Auslenkung des Mastkopfes zur Ermittlung der Lebensdauer des Mastes herangezogen wird.

7. Verfahren nach Anspruch 6, **dadurch gekennzeichnet, dass** die Geschwindigkeit der Abnahme der Steifigkeit des Mastes unter der Annahme ermittelt wird, dass zum Zeitpunkt der Aufstellung des Mastes der technische Idealzustand vorliegt und der Mast seine maximal mögliche Steifigkeit hat.

8. Verfahren nach einem der vorhergehenden Ansprüche, **dadurch gekennzeichnet, dass** bei der Ermittlung der Steifigkeit des Mastes aus Holz die Feuchtigkeit des Holzes berücksichtigt wird.

9. Verfahren nach Anspruch 8, **dadurch gekennzeichnet, dass** Kenndaten eine vorgegebene jahreszeitabhängige Feuchtigkeit des Holzes enthalten, die bei der Ermittlung der Standsicherheit berücksichtigt wird.

10. Verfahren nach einem der vorhergehenden Ansprüche, **dadurch gekennzeichnet, dass** zur Bestimmung der Standsicherheit des Mastes eine automatische Lokalisierung des Mastes über ein Navigationssatellitensystem und auf Basis dieser Lokalisierung eine automatische Zuführung und/oder Zuordnung von Kenndaten aus einer Datenbank erfolgt.

11. Verfahren nach einem der vorhergehenden Ansprüche, **dadurch gekennzeichnet, dass** die Standsicherheit eines beseilten Mastes unter Berücksichtigung eines temperaturabhängigen Seildurchhangs erfolgt.

12. Verfahren nach Anspruch 11, **dadurch gekennzeichnet, dass** der umgebungsbedingte Seildurchhang aus einer Datenbank bezogen oder durch Messung der Umgebungstemperatur unter Berücksichtigung von seilspezifischen Kenndaten ermittelt wird.

13. Verfahren nach einem der vorhergehenden Ansprüche, **dadurch gekennzeichnet, dass** die Standsicherheit des Mastes unter Berücksichtigung der generalisierten Masse des Mastes und der eventuell daran angeordneten Bauteile ermittelt wird.

14. Verfahren nach einem der vorhergehenden Ansprüche, **dadurch gekennzeichnet, dass** die Standsicherheit eines mit einer Strom leitenden Beseilung bestückten Mastes unter Berücksichtigung der elektrischen Leistung ermittelt wird, die durch die Beseilung geleitet wird.

15. Vorrichtung zur Durchführung des Verfahrens nach einem der vorhergehenden Ansprüche, mit einer die Bestimmung der Steifigkeit des Mastes unterstützenden Recheneinheit.

## Claims

1. Method for determining the stability of a mast that has been installed at an operating site, is secured to a foundation or is standing in the ground, the oscillations of the mast made to vibrate by being excited artificially or by environmental influences being recorded by measuring instruments and at least one natural frequency of the mast determined therefrom,
**characterized in that** a nonlinearity of the vibration behaviour of the excited mast is analyzed and, on the basis of the result of this analysis, it is established whether there is any damage to the mast and/or its securement in the foundation area and **in that** the dependence of the natural frequency on the vibration amplitude is determined and a calibration frequency is calculated on the basis of this dependence and used to calibrate a mechanical model of the mast and, on this basis, the stability of the mast is ascertained.

2. Method according to Claim 1, **characterized in that** the calibration frequency is less than the ascertained natural frequency or at most equal to it.

3. Method according to one of the preceding claims, **characterized in that**, on the basis of the stiffness of the mast derived from the oscillation spectrum, a deflection of the top of the mast under external loading of the mast is ascertained, the ascertained deflection being compared with an admissible deflection for determining the stability of the mast.

4. Method for determining the stability of a mast that has been installed at an operating site, is secured to a foundation or is standing in the ground, in particular according to one of Claims 1 to 3, the oscillation spectrum of the mast made to vibrate by being excited artificially or by environmental influences being recorded and at least one natural frequency of the mast determined therefrom, the lifetime of the mast being ascertained on this basis.

5. Method according to Claim 4, **characterized in that** the year of construction of the mast and/or class limits are used as a further condition parameter in the estimation of the service life.

**6.** Method according to Claim 4 or 5, **characterized in that**, on the basis of the stiffness of the mast derived from the vibration measurement, a deflection of the top of the mast under external loading of the mast is ascertained, the deflection of the top of the mast being used for ascertaining the lifetime of the mast.

**7.** Method according to Claim 6, **characterized in that** the rate of decrease in the stability of the mast is ascertained on the assumption that the mast is in its ideal technical condition and has its maximum possible stiffness at the time of installation of the mast.

**8.** Method according to one of the preceding claims, **characterized in that**, in the ascertainment of the stiffness of the mast made of wood, the moisture of the wood is taken into account.

**9.** Method according to Claim 8, **characterized in that** characteristic data include a predetermined seasonally dependent moisture of the wood, which is taken into account in the ascertainment of the stability.

**10.** Method according to one of the preceding claims, **characterized in that**, for determining the stability of the mast, a satellite navigation system is used for automatically locating the mast and, on the basis of this locating process, characteristic data from a database are automatically supplied and/or assigned.

**11.** Method according to one of the preceding claims, **characterized in that** the stability of a mast carrying conductors is obtained while taking into account a temperature-dependent conductor sag.

**12.** Method according to Claim 11, **characterized in that** the environmentally dependent conductor sag is ascertained from a database with reference to or by measurement of the ambient temperature while taking into account conductor-specific characteristic data.

**13.** Method according to one of the preceding claims, **characterized in that** the stability of the mast is ascertained while taking into account the generalized mass of the mast and the components possibly arranged on it.

**14.** Method according to one of the preceding claims, **characterized in that** the stability of a mast fitted with current-carrying conductors is ascertained while taking into account the electrical power that is passed through the conductors.

**15.** Device for carrying out the method according to one of the preceding claims, with a computing unit assisting the determination of the stiffness of the mast.

**Revendications**

**1.** Procédé de détermination de la stabilité de pose d'un mât posé sur son site d'utilisation, fixé sur une fondation ou debout dans le sol, les oscillations du mât amené à osciller artificiellement ou sous l'effet de l'environnement étant saisies par une technique de mesure, au moins une fréquence propre du mât étant déterminée à partir de là,
**caractérisé en ce que**
la linéarité du comportement d'oscillation du mât excité est analysée et on vérifie à l'aide du résultat de cette analyse si le mât et/ou sa fixation au niveau de la fondation ont été endommagés et
**en ce que** la dépendance de la fréquence propre vis-à-vis de l'amplitude d'oscillation est déterminée et sur la base de cette dépendance, une fréquence d'étalonnage est calculée, un modèle mécanique du mât est étalonné à partir de là, la stabilité de pose du mât étant déterminée sur cette base.

**2.** Procédé selon la revendication 1, **caractérisé en ce que** la fréquence d'étalonnage est inférieure à la fréquence propre déterminée ou au plus égale à cette dernière.

**3.** Procédé selon l'une des revendications précédentes, **caractérisé en ce que** sur la base de la rigidité du mât déduite du spectre d'oscillation, un déplacement de la tête du mât sous une sollicitation externe du mât est déterminé, le déplacement ainsi déterminé étant comparé à un déplacement admissible pour déterminer la stabilité de pose du mât.

**4.** Procédé de détermination de la stabilité de pose d'un mât posé sur son site d'utilisation, fixé sur une fondation ou debout dans le sol, en particulier selon l'une des revendications 1 à 3, dans lequel le spectre d'oscillation du mât amené à osciller artificiellement ou sous l'effet de l'environnement est déterminé, au moins une fréquence du mât étant déterminée à partir de là, la durée de vie du mât étant déterminée sur cette base.

5. Procédé selon la revendication 4, **caractérisé en ce que** comme autres paramètres d'état lors de l'estimation de la durée de vie, on utilise l'année de construction du mât et/ou des limites de classe.

6. Procédé selon les revendications 4 ou 5, **caractérisé en ce que** sur la base de la rigidité du mât déduite de la mesure des oscillations, on déterminer un déplacement de la tête du mât sous une sollicitation externe du mât, le déplacement de la tête du mât intervenant dans la détermination de la durée de vie du mât.

7. Procédé selon la revendication 6, **caractérisé en ce que** la vitesse de la réduction de la rigidité du mât est déterminée en posant l'hypothèse qu'à l'instant de la pose du mât, l'état technique qui prévaut est idéal et que le mât présente sa rigidité maximale possible.

8. Procédé selon l'une des revendications précédentes, **caractérisé en ce que** lors de la détermination de la rigidité du mât en bois, on tient compte de l'humidité du bois.

9. Procédé selon la revendication 8, **caractérisé en ce que** des données caractéristiques contiennent une humidité du bois prédéterminée et dépendant de son âge, qui est prise en compte lors de la détermination de la stabilité de pose.

10. Procédé selon l'une des revendications précédentes, **caractérisé en ce que** pour déterminer la stabilité de pose du mât, on réalise une localisation automatique du mât par l'intermédiaire d'un système de satellite de navigation, et une amenée automatique et/ou une attribution automatique de données caractéristiques provenant d'une base de données sont réalisées sur la base de cette localisation.

11. Procédé selon l'une des revendications précédentes, **caractérisé en ce que** la stabilité de pose d'un mât câblé est réalisée en tenant compte de la flèche du câble dépendant de la température.

12. Procédé selon la revendication 11, **caractérisé en ce que** la flèche du câble provoquée par l'environnement est extraite d'une base de données ou est déterminée par mesure de la température ambiante en tenant compte de données caractéristiques spécifiques du câble.

13. Procédé selon l'une des revendications précédentes, **caractérisé en ce que** la stabilité de pose du mât est déterminée en tenant compte de la masse généralisée du mât et des composants qui y sont éventuellement disposés.

14. Procédé selon l'une des revendications précédentes, **caractérisé en ce que** la stabilité de pose d'un mât équipé d'un câble conduisant le courant est déterminée en tenant compte de la puissance électrique transmise par le câble.

15. Ensemble en vue de la mise en oeuvre du procédé selon l'une des revendications précédentes, et présentant une unité de calcul qui assiste la détermination de la rigidité du mât.

Fig. 1

Kontrolle der gekürzten Hüllkurve der Abklingkurve

Fig. 2

Kontrolle der Anpassung durch: Frequenz = a*Amplitude$^b$

ursprüngliche Werte
a*x$^b$: a = 2.6088, b = 0.02192, Fehler = 0.68162

Amplitude

**Fig. 3**

**IN DER BESCHREIBUNG AUFGEFÜHRTE DOKUMENTE**

**In der Beschreibung aufgeführte Patentdokumente**

- DE 10300947 A1

- WO 2010128056 A1